# EUROPÄISCHE PATENTSCHRIFT

(11) **EP 0 900 691 B1**
(45) Veröffentlichungstag und Bekanntmachung des Hinweises auf die Patenterteilung: **18.12.2002**
(21) Anmeldenummer: 98116467.6
(22) Anmeldetag: 01.09.1998
(51) Int. Cl.: B60N 3/02

(54) **Dämpfungsvorrichtung für einen Haltegriff**
Damping device for a hand grip
Dispositif amortisseur pour une poignée de maintien

(30) Priorität: 04.09.1997 DE 29715912 U
(43) Veröffentlichungstag der Anmeldung: 10.03.1999
(73) Patentinhaber: Kendrion RSL Germany GmbH, 57368 Lennestadt (DE)
(72) Erfinder: Schmidt, Reinhard, 57368 Lennestadt (DE); Strunk, Harald, 58840 Plattenberg (DE)
(74) Vertreter: Nöth, Heinz, Dipl.-Phys.

(56) Entgegenhaltungen:
- DE-A- 3 513 293
- DE-U- 29 604 260
- DE-U- 29 612 550
- FR-A- 559 969
- FR-A- 1 006 531
- FR-A- 2 606 846

## Beschreibung

Die Erfindung betrifft einen Dämpferflügel mit einer Dämpfungsvorrichtung zum Dämpfen seiner Drehbewegung nach dem Oberbegriff des Patentanspruches 1.

Eine derartige aus der FR-A 1,006,531 bekannte als Drehdämpfer ausgebildete Dämpfungsvorrichtung besitzt einen in einer Hohlkammer schwenkbar angeordneten Dämpferflügel, wobei zwischen dem Ende des Dämpferflügels und der Innenwand der Hohlkammer ein Spalt gebildet wird. Um bei der Drehung des Dämpferflügels eine sich ändernde Spaltweite zu erreichen, ist die Schwenkachse des Dämpferflügels exzentrisch im Hohlraum gelagert. Bei der Drehbewegung des Dämpferflügels im Hohlraum wird ein im Hohlraum angeordnetes Dämpferfluid durch den sich ändernden Spalt von der einen Seite des Dämpferflügels zu anderen Dämpferflügelseite bewegt. Hierdurch erreicht man eine sich ändernde Dämpfungswirkung.

Aus der DE 35 13 293 A1 ist ein Fahrzeugausrüstungsteil wie ein Haltegriff, ein Handschuhkastendeckel, ein Ascher oder dergleichen bekannt geworden, das schwenkbeweglich gelagert ist und mit einem hydraulischen Flügelstoßdämpfer ausgerüstet ist, der eine Einrichtung zur Verhinderung eines schlagartigen Bewegungsablaufs bildet, so dass eine Rückstellbewegung des Fahrzeugausrüstungsteils in eine Nichtgebrauchslage, die z. B. durch Federkraftwirkung bewirkt wird, gedämpft erfolgt. Der Flügelstoßdämpfer besteht im wesentlichen aus einer zylindrischen Kapsel und einem darin drehbeweglich gelagerten Flügel und einem in der Kapsel angeordneten Druckmedium, wobei zwischen dem freien Flügelende und der Innenwandung der Kapsel ein Spalt zur Ermöglichung einer laminaren Strömung des Druckmediums vorgesehen ist. Um die Dämpfung und die Bremswirkung zu variieren, wird vorgeschlagen, die über den Bewegungsweg des Flügels konstante Spaltweite zu verändern, d. h. je nach Ausführungsbeispiel eine unterschiedliche Spaltweite vorzusehen.

Aus der DE 296 04 260 U1 ist ein Klappgriff mit einem Griffbügel bekannt, der an seinem einen Lagerbock eine Drehfeder zum Erzeugen einer Rückstellkraft und an seinem anderen Lagerbock eine Bremseinrichtung zur Dämpfung der Rückstellbewegung aufweist. Die Bremseinrichtung weist ein Gehäuse mit einem darin drehbaren Drehkolben auf. Das mit dem Griffbügel gekoppelte Gehäuse ist zylindrisch und weist einen sacklochförmigen Ringraum auf, in den der Drehkolben mit einem ringzylindrischen Abschnitt eintaucht, wobei zwei Ringspalten mit konstanten Spaltweiten gebildet sind, die mit einem viskosen Material wie Siliconöl/-fett gefüllt sind. Die Bremsoder Dämpfwirkung wird ausschließlich über das viskose Material erzielt.

Aufgabe der vorliegenden Erfindung ist es, eine Dämpfungsvorrichtung der eingangs genannten Art zu schaffen, die einfach aufgebaut ist.

Diese Aufgabe wird durch die kennzeichnenden Merkmale des Patentanspruches 1 gelöst. Vorteilhafte Ausgestaltungen der Erfindung sind in den Unteransprüchen angegeben.

Durch die sich ändernde Spaltweite entlang der Drehbewegung des zentrisch in der Hohlkammer angeordneten Dämpferflügels kann eine auf den Dämpferflügel wirkende Rückstellkraft mit insbesondere nichtlinearer Kennlinie durch Anpassung der jeweiligen Dämpferkraft ausgeglichen werden, so dass ein kontinuierlicher, gedämpfter Bewegungsablauf erzielt wird. Ein solcher Bewegungsablauf ist inbesondere bei einem eingangs beschriebenen Handgriff in Kraftfahrzeugen erwünscht, bei dem die Rückstellbewegung des Griffes unter Berücksichtigung einer abfallenden Federrückstellkraft bei der Rückstellbewegung gedämpft werden soll. Somit kann eine Dämpfungsvorrichtung mit einer z. B. federkennlinienabhängigen Spaltgeometrie zur Steuerung des Dämpfungsverhaltens eines Dämpfers bereitgestellt werden, wobei die Rückstellkraft statt durch Federkraft auch durch andere bekannte Kraftmittel wie elastische Kraftmittel oder dergleichen aufgebracht werden kann.

Zwischen dem Dämpferflügel und der Hohlkammerwand wird durch die Gestaltung der Hohlkammerwand der sich in seiner Weite ändernder Spalt gebildet. Durch das in der Hohlkammer enthaltende Dämpfermedium bzw. Dämpferfluid wird eine sich ändernde Dämpfungskraft an dem Dämpferflügel erzeugt, wenn dieser sich bewegt und das Dämpferfluid durch den Spalt hindurchtritt.

Nachfolgend wird die Erfindung anhand von Ausführungsbeispielen unter Bezugnahme auf Zeichnungen näher erläutert. Es zeigt:
- Fig. 1: in einer Schnittansicht in schematischer Darstellung ein Ausführungsbeispiel einer erfindungsgemäßen Dämpfungsvorrichtung in einer Ausgangsstellung vor einer Rückstellbewegung;
- Fig. 2: in einer Schnittansicht gemäß Fig. 1 die Dämpfungsvorrichtung in einer Zwischenstellung bei der Rückstellbewegung;
- Fig. 3: in einer Schnittansicht gemäß Fig. 1 und 2 die Dämpfungsvorrichtung in einer Endstellung in Ruhelage;
- Fig. 4: in einer Schnittansicht entsprechend der Fig. 1 ein zweites Ausführungsbeispiel einer erfindungsgemäßen Dämpfungsvorrichtung;
- Fig. 5: in einer Schnittansicht das zweite Ausführungsbeispiel in einer Zwischenstellung entsprechend der Fig. 2;
- Fig. 6: in einer Schnittansicht das zweite Ausführungsbeispiel in einer Endstellung entsprechend der Fig. 3;
- Fig. 7: in einer Schnittansicht ein weiteres Ausführungsbeispiel der Dämpfungsvorrichtung; und
- Fig. 8: in einer teilgeschnittenen Draufsicht einen Handgriff mit einer erfindungsgemäßen Dämpfungsvorrichtung.

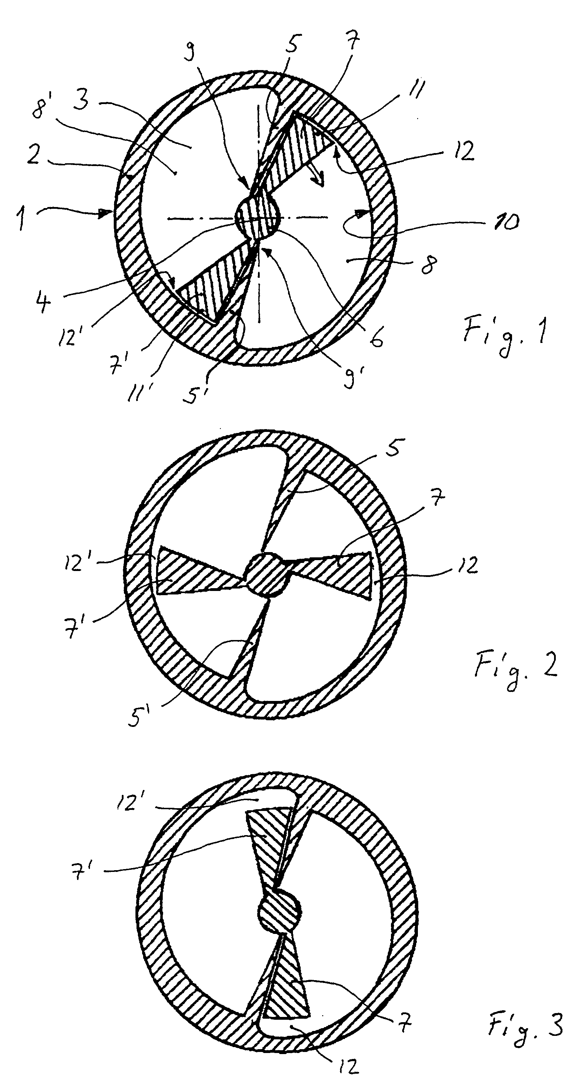

Eine erfindungsgemäße Dämpfungsvorrichtung enthält ein in etwa zylindrisches Gehäuse 1 (siehe Fig. 1) mit einer von einer ringförmigen Gehäusewand 2 sowie axialen Begrenzungswänden (nicht dargestellt) umgebenen Hohlkammer 3, die durch zwei zu einer Längsachse 4 des Gehäuses 1 sich gegenüberliegende radial einwärts erstreckende Trennwände 5, 5' sowie eine zentrale Drehlagerachse oder Dämpferachse 6 mit zwei Dämpferflügeln 7, 7' in zwei Hohlkammerhälften 8, 8' unterteilt ist. Die beiden Hohlkammerhälften 8, 8' sind mit einem viskosen Dämpfungsfluid wie z. B. einem Siliconöl gefüllt. Die beiden Trennwände 5, 5' grenzen mit ihren freien Enden 9, 9' (die in den Figuren schematisch spitz zulaufend dargestellt sind, jedoch auch anders geformte, breitere Grenzflächen aufweisen können) derart an die zylindrische Dämpferachse 6, daß eine weitgehend fluiddichte Abdichtung zwischen den beiden Hohlkammerhälften 8, 8' auch bei einem Verdrehen der Dämpferachse 6 gebildet ist.

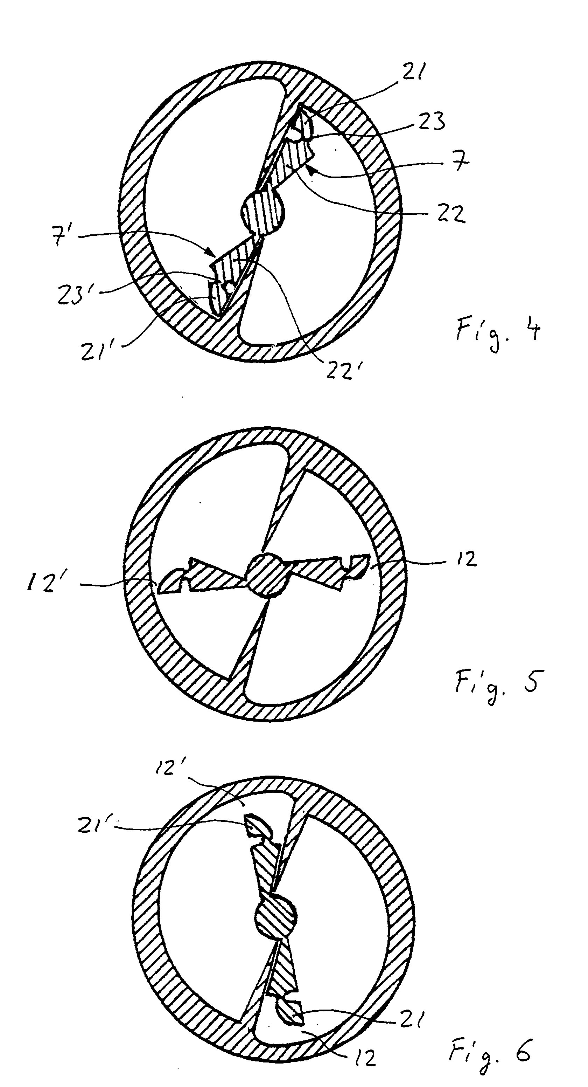

Eine Innenfläche oder Innenkontur 10 der ringförmigen Gehäusewand 2 an jeder Hohlkammerhälfte 8, 8' ist im dargestellten Querschnitt als eine bezüglich der Längsachse 4 archimedische Spirale gebildet, die sich bezüglich einer Dämpfungsbewegung der Dämpferflügel 7, 7' (von Fig. 1 nach Fig. 3 gemäß Pfeilrichtung) radial erweitert. Die Dämpferflügel 7, 7' weisen eine solche radiale Ausdehnung auf, daß in der Ausgangsstellung (Fig. 1) zwischen der jeweiligen Flügelspitze 11, 11', d. h. dem Umfangsbereich des jeweiligen Dämpferflügels 7, 7' und der Gehäusewand 2, ein Spalt 12, 12' mit einer geringen Spaltweite gebildet ist, die bei der Drehbewegung der Dämpferflügel 7, 7' entsprechend der archimedischen Spirale bis zu einem maximalen Wert (Fig. 3) zunimmt.

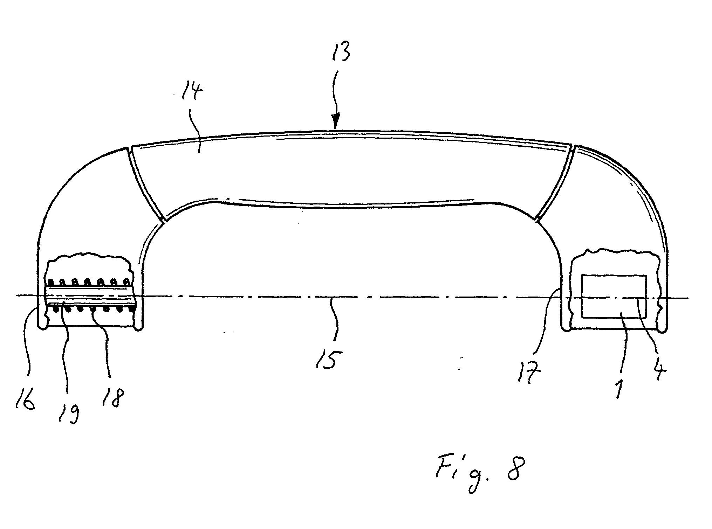

Die dargestellte Dämpfungsvorrichtung kann beispielsweise mit einem aus der DE 35 13 293 A1 bekannten schwenkbaren Halte- oder Handgriff 13 (siehe Fig. 8) im Formhimmel eines Kraftfahrzeuges gekoppelt oder in diesem integriert sein. Ein Griffteil 14 des Handgriffs 13 ist an Lagerstellen 16, 17 am Fahrzeugaufbau gelagert und kann um eine Griffteilachse 15 aus einer Ruhe- oder Nichtgebrauchsstellung gegen eine Federkraft, z. B. die Kraft einer Rückstellfeder 18, in eine Gebrauchsstellung geschwenkt werden, in der die Dämpferflügel 5, 5' der Dämpfungsvorrichtung die in Fig. 1 dargestellte Position einnehmen. Die Rückstellfeder 18 ist im Ausführungsbeispiel als Schraubenfeder ausgebildet, die an der Lagerstelle 16 um einen Lagerbolzen 19 gewickelt ist und sich einerseits am Fahrzeugaufbau und andererseits am Griffteil 14 abstützt. An der anderen Lagerstelle 17 ist die erfindungsgemäße Dämpfervorrichtung vorgesehen, deren Gehäuse 1 in das Griffteil 14 integriert ist. Dabei können entweder das Gehäuse 1 mit dem Fahrzeugaufbau fest verbunden und die Dämpferflügel 7, 7' mit dem Griffteil 14 drehbeweglich gekoppelt sein oder die Dämpferflügel 7, 7' sind feststehend ausgebildet und das Gehäuse 1 rotiert mit dem Griffteil 14.

In der Gebrauchsstellung weist die gespannte Rückstellfeder 18 eine große Rückstellkraft auf. Beim Loslassen des Handgriffs 13 werden durch die Federkraft der Handgriff und damit die Dämpferachse 6 und die Dämpferflügel 7, 7' verschwenkt, deren Drehbewegung jedoch durch das Dämpferfluid gebremst oder gedämpft wird, da dieses in der jeweiligen Hohlkammerhälfte 8, 8' aus dem Bereich in Bewegungsrichtung vor dem Dämpferflügel 7, 7' durch den Spalt 12, 12' in den Bereich hinter den Dämpferflügel 7, 7' strömem muß. Die Bremskraft wird dabei u. a. von der Spaltweite, der durch die Breite des Dämpferflügels 7, 7' am Umfang 11, 11' bedingten Breite des Spaltes 12, 12' und durch die Viskosität des Dämpferfluids bestimmt. Mit zunehmendem Drehwinkel des Griffteils 14 des Handgriffs 13 und damit der Dämpferflügel 7, 7' vergrößert sich die Weite des Spaltes 12, 12', wodurch die Bremskraft auf die bewegten Dämpferflügel 7, 7' abnimmt. Gleichzeitig nimmt auch die Federkraft der Rückstellfeder 18 ab, so daß eine gleichmäßige Rückstellbewegung erzeugt wird, die bis zur Stellung der Dämpferflügel 7, 7' in Fig. 3 führt, wo ein gedämpftes Anlegen der Dämferflügel 7, 7' an die Trennwände 5, 5' erfolgt und damit ein gedämpfter, weicher Anschlag des Handgriffs in seine Ruhe- oder Nichtgebrauchsposition erfolgt. Bei einer erneuten Benutzung des Handgriffs werden die Dämpferflügel 7, 7' wiederum aus der Ruhelage (Fig. 3) in die Gebrauchslage (Fig. 1) geschwenkt, wobei aufgrund der abnehmenden Spaltweite eine zunehmende Dämpfungskraft gegen die Handkraft wirkt.

Um die Spaltweite über den Bewegungsweg zu variieren, d. h. mit unterschiedlicher Weite zu gestalten, kann statt der beschriebenen gehäusezentrischen Drehlagerung der Dämpferflügel 7, 7' und einer dazu speziell angepaßten Innenwandgeometrie, z. B. einer archimedischen Spirale, alternativ auch eine exzentrische Drehlagerung eines Dämpferflügels in einer zylindrischen Hohlkammer vorgesehen sein, wodurch auch eine Spaltweitenvariation entlang des Bewegungsweges der Dämpferflügel erzielt wird.

Abweichend von dem dargestellten Ausführungsbeispiel kann die Dämpfervorrichtung auch mit nur einem Dämpferflügel oder mit mehr als zwei Dämpferflügeln mit entsprechender Hohlkammergestaltung bzw. Anzahl an Hohlkammern ausgestattet sein. Mit abweichender Flügelanzahl ändert sich der mögliche Gesamtdrehwinkel, wobei durch ein zwischen der Dämpferachse und dem Handgriff vorgesehenes Getriebe ein gewünschter Schwenkwinkel des Handgriffs eingestellt werden kann.

In Fig. 7 ist ein Ausführungsbeispiel dargestellt, bei dem die Gehäusewand 2 auf ihrer Innenseite 10 im Bereich der Ruhe- oder Nichtgebrauchsstellung der Dämpferflügel 7, 7' jeweils einen vertieften Abschnitt 20 aufweist, so daß bei der Rückbewegung im letzten Bewegungsabschnitt die Bremsoder Dämpfungskraft reduziert ist und die Dämpferflügel 7, 7' vor dem Anlegen an die Trennwände 5, 5' eine gewisse Zusatzbeschleunigung erhalten, um auch bei geringer Federkraft der Rückstellfeder 18 im Bereich der Ruhelage dennoch ein zuverlässiges Anlegen des Haltegriffs 13 in seine Ruhe- oder Anschlagslage zu erreichen.

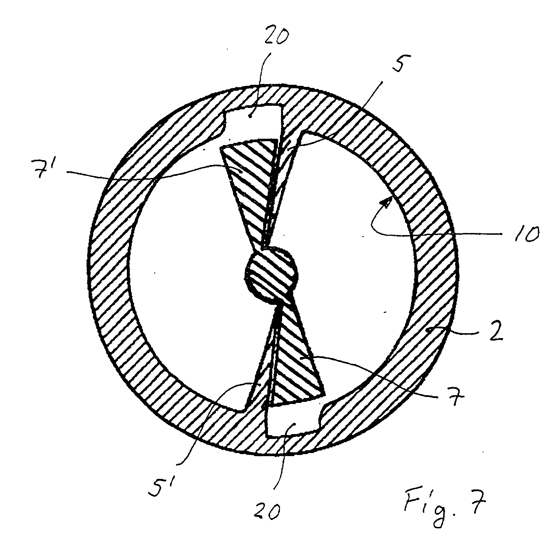

Bei einem weiteren Ausführungsbeispiel der erfindungsgemäßen Dämpfervorrichtung (siehe Fig. 4 bis 6) weist jeder Dämpferflügel 7, 7' einen äußeren radialen Endabschnitt 21, 21' auf, der gegenüber dem inneren Flügelabschnitt 22, 22' über einen verengten Bereich 23, 23' im Sinne eines Filmscharniers elastisch flexibel verbunden ist. Die Elastizität bzw. Flexibilität des Scharniers ist durch das verwendete Material (z. B. Kunststoff) und die Scharnierdicke derart eingestellt, daß bei einer hohen Temperatur des Dämpfungsfluids, bei der eine geringere Viskositätskraft die Dämpfungskraft reduziert, der äußere Endabschnitt 21, 21' des Dämpferflügels 7, 7' gegenüber dem inneren Flügelabschnitt 22, 22' nicht verschwenkt ist, so daß die vorgesehene radiale Erstreckung oder Ausdehnung der Dämpferflügel 7, 7' unverändert ist und somit die Spaltweite des Spaltes 12, 12' dadurch unbeeinflußt ist.

Bei einer niedrigeren Temperatur weist das Dämpfungsfluid eine höhere Viskositätskraft auf, so daß eine größere Bremskraft auf den bewegten Dämpferflügel 7, 7' wirkt und eine elastische Verschwenkung des äußeren Flügelendabschnitts 21, 21' um das Scharnier 23, 23' gegen die Bewegungsrichtung bewirkt (nicht dargestellt). Dadurch vergrößert sich die jeweilige Spaltweite des Spaltes 12, 12' und die Dämpfungskraft nimmt ab. Durch diese Gestaltung wird somit eine Temperaturanpassung der Dämpfungskraft der Dämpfungsvorrichtung erreicht.

Bei mehreren Dämpferflügeln kann die jeweilige Spaltweite bei einer bestimmten Bewegungsstellung der Dämpferflügel unterschiedlich sein, so daß jeweils unterschiedliche Dämpfungskräfte an jedem Flügel eine Gesamtdämpfungskraft ergeben.

Entlang der Längsachse 4 des Gehäuses 1, d. h. in axialer Richtung des Spaltes 12, kann die Spaltweite ebenfalls variiert werden, so daß eine zusätzliche Möglichkeit zur Beeinflussung der Dämpfungskraft gegeben ist. Diese Variation kann beispielsweise über eine entsprechende Gestaltung der Gehäuseinnenwand erreicht werden.

## Patentansprüche

1. Dämpferflügel (7, 7') mit Dämpfungsvorrichtung zum Dämpfen seiner Drehbewegung, der für eine Schwenkbewegung in einer Hohlkammer (8, 8'), die teilweise oder vollständig mit einem viskosen Medium oder Dämpferfluid gefüllt ist, drehbar gelagert ist, wobei ein freies Flügelende (11, 11') sich beim Verschwenken des Dämpferflügels (7, 7') an der gekrümmten Innenseite (10) der Hohlkammer (8, 8') entlangbewegt und ein Spalt (12, 12') zwischen dem Flügelende (11, 11') und der Innenseite (10) mit bei der Schwenkbewegung sich ändernder Spaltweite gebildet ist, und wobei der Dämpferflügel (7, 7') zentrisch zur Hohlkammer (3) gelagert ist, **dadurch gekennzeichnet, daß** die Innenwand (10) der Hohlkammer (3) gemäß einer archimedischen Spirale gebildet ist.

2. Dämpferflügel nach Anspruch 1, **dadurch gekennzeichnet, daß** die Innenwand (10) der Hohlkammer (3) zumindest einen radial nach außen vertieften Bereich (20) aufweist.

3. Dämpferflügel nach Anspruch 1 oder 2, **dadurch gekennzeichnet, daß** der Dämpferflügel (7, 7') ein- oder mehrflügelig ist.

4. Dämpferflügel nach einem der Ansprüche 1 bis 3, **dadurch gekennzeichnet, daß** jeder Dämpferflügel (7, 7') in einer eigenen Hohlkammer (8, 8') untergebracht ist.

5. Dämpferflügel nach einem der Ansprüche 1 bis 4, **dadurch gekennzeichnet, daß** ein radial äußerer Flügelendabschnitt (21, 21') elastisch verschwenkbar ist.

6. Dämpferflügel nach Anspruch 5, **dadurch gekennzeichnet, daß** der radial äußerer Flügelendabschnitt (21, 21') über ein Filmscharnier (23, 23') mit dem Dämpferflügel (7, 7') verbunden ist.

7. Dämpferflügel nach einem der Ansprüche 1 bis 6, **dadurch gekennzeichnet, daß** sie an einem Fahrzeugausrüstungsteil wie einem Handgriff (13) oder dergleichen integriert oder mit diesem gekoppelt ist.

8. Dämpferflügel nach Anspruch 7, **dadurch gekennzeichnet, daß** die Dämpferachse (6) eine Lagerachse des Handgriffs (13) bildet, auf der eine Rückstellfeder (18) angeordnet ist.

9. Dämpferflügel nach Anspruch 7, **dadurch gekennzeichnet, daß** zwischen der Dämpferachse (7) und dem Handgriff (13) ein Getriebe vorgesehen ist.

## Claims

1. A damper vane (7, 7') with a damping device for damping its rotary movement which is rotatably mounted for a pivotal movement in a hollow chamber (8, 8') which is partly or completely filled with a viscous medium or damper fluid, wherein a free vane end (11, 11') upon pivotal movement of the damper vane (7, 7') moves along the curved inside (10) of the hollow chamber (8, 8') and a gap (12, 12') is formed between the vane end (11, 11') and the inside (10), with a gap width which varies in the pivotal movement, and wherein the damper vane (7, 7') is mounted concentrically with respect to the hollow chamber (3), **characterised in that** the inside wall (10) of the hollow chamber (3) is formed according to an Archimedes' spiral.

2. A damper vane according to claim 1 **characterised in that** the inside wall (10) of the hollow chamber (3) has at least one radially outwardly recessed region (20).

3. A damper vane according to claim 1 or claim 2 **characterised in that** the damper vane (7, 7') is single- or multi-vaned.

4. A damper vane according to one of claims 1 to 3 **characterised in that** each damper vane (7, 7') is disposed in its own hollow chamber (8, 8').

5. A damper vane according to one of claims 1 to 4 **characterised in that** a radially outer vane end portion (21, 21') is elastically pivotable.

6. A damper vane according to claim 5 **characterised in that** the radially outer vane end portion (21, 21') is connected to the damper vane (7, 7') by way of a film hinge (23, 23').

7. A damper vane according to one of claims 1 to 6 **characterised in that** it is integrated on or coupled to a vehicle component such as a handle (13) or the like.

8. A damper vane according to claim 7 **characterised in that** the damper axis member (6) forms a mounting axis member of the handle (13), on which a return spring (18) is arranged.

9. A damper vane according to claim 7 **characterised in that** a transmission is provided between the damper axis member (7) and the handle (13).

## Revendications

1. Ailette (7, 7') d'amortisseur, comprenant un dispositif d'amortissement destiné à amortir un mouvement de rotation, et montée tournante pour un mouvement de basculement dans une chambre (8, 8') creuse, qui est emplie en tout ou partie d'un fluide visqueux ou d'un fluide d'amortisseur, une extrémité (11, 11') libre de l'ailette se déplaçant, lors du basculement de l'ailette (7, 7') d'amortisseur, le long du côté (10) intérieur courbé de la chambre (8, 8') creuse, et un intervalle (12, 12') étant formé entre l'extrémité (11, 11') de l'ailette et le côté (10) intérieur, la largeur de l'intervalle se modifiant avec le mouvement de basculement, et l'ailette (7, 7') d'amortisseur étant montée centrée par rapport à la chambre (3) creuse, **caractérisée en ce que** la paroi (10) intérieure de la chambre (3) creuse a la forme d'une spirale d'Archimède.

2. Ailette d'amortisseur suivant la revendication 1, **caractérisée en ce que** la paroi (10) intérieure de la chambre (3) creuse, a au moins une partie (20) renfoncée radialement vers l'extérieur.

3. Ailette d'amortisseur suivant la revendication 1 ou 2, **caractérisée en ce que** l'ailette (7, 7') d'amortisseur est une ailette unique ou une ailette multiple.

4. Ailette d'amortisseur suivant l'une des revendications 1 à 3, **caractérisée en ce que** chaque ailette (7, 7') d'amortisseur est logée dans sa propre chambre (8, 8') creuse.

5. Ailette d'amortisseur suivant l'une des revendications 1 à 4, **caractérisée en ce qu'**une partie (21, 21') extérieure radialement de l'extrémité de l'ailette peut basculer élastiquement.

6. Ailette d'amortisseur suivant la revendication 5, **caractérisée en ce que** la partie (21, 21') extérieure radialement de l'extrémité de l'ailette, est reliée à l'ailette (7, 7') d'amortisseur par une charnière (23, 23') souple.

7. Ailette d'amortisseur suivant l'une des revendications 1 à 6, **caractérisée en ce qu'**elle est intégrée à une partie d'équipement d'un véhicule automobile comme une poignée (13) ou analogue, ou est couplée à celle-ci.

8. Ailette d'amortisseur suivant la revendication 7, **caractérisée en ce que** l'axe (6) de l'amortisseur forme un axe de palier de la poignée (13) sur lequel est monté un ressort (18) de rappel.

9. Ailette d'amortisseur suivant la revendication 7, **caractérisée en ce qu'**il est prévu une transmission entre l'axe (7) de l'amortisseur et la poignée (13).
